# EUROPEAN PATENT APPLICATION

(11) **EP 2 025 520 A1**
(43) Date of publication of application: **18.02.2009**
(21) Application number: 07114440.6
(22) Date of filing: 16.08.2007
(51) Int. Cl.: B41J 2/21, G06K 15/10

(54) **Colour dot matrix print method and printing apparatus**

(71) Applicant: Mutoh Europe N.V., 8400 Oostende (BE)
(72) Inventor: Schaum, Martin, B-8670, OOSTDUINKERKE (BE); Defever, Serge, B-8460, OUDENBURG (BE)
(74) Representative: pronovem

(57) **Abstract**

The present invention is related to a method of colour dot matrix printing comprising superposing droplets of a multitude of ink colourants in multiple passes of a print head relative to a medium in order to form a pixel of a predetermined colour. In each pass of the print head pixel locations on the medium are scanned by the print head. Each pixel location (i, j) scanned in a pass is arranged to receive in said pass one or more ink colourants. Said one or more ink colourants are different from the ink colourants arranged to be received in said pass by pixel locations contiguous to said pixel location (i, j) in the same row i and by contiguous pixel locations in the same column j of the matrix of pixel locations scanned in said pass. An apparatus for colour dot matrix printing, comprising means for carrying out the method according to the invention is equally provided.

## Description

### Field of the Invention

The present invention is related to colour dot matrix print methods and printing apparatuses. More particularly, the present invention is related to the field of colour ink jet printing. A set of ink colourants is used to record pixels of a predetermined colour by superposition of droplets of ink colourants from the set.

### State of the Art

It is known in the art of colour ink jet printing to record a pixel of a predetermined colour on a print medium by superposing droplets of different ink colourants, see e.g. US 6179407. The recording of the droplets can be spread across multiple passes in order to reduce the amount of ink that is deposited in a single pass for each pixel of the image.

The reduction of the ink deposition rate per pass is advantageous for reducing coalescence between ink drops of contiguous pixels. Ink coalescence occurs when contiguous pixel locations receive at short time intervals large amounts of ink, which do not have sufficient time for drying and therefore coalesce across the pixel boundaries to form larger drops. Ink coalescence gives rise to a mottled image. Ink coalescence occurs primarily at printing locations where high ink concentrations are laid. The highest ink concentrations occur at locations where several ink colourants are superposed (mixed) to form pixels of predetermined colours.

An ink colourant (or a colour channel) refers to a primary colour or dye which can be mixed with one or more other primary colours to obtain a predetermined colour. The print head of a colour ink jet printer carries a limited set of ink colourants (typically four colourants: cyan, yellow, magenta and black). By superposing droplets of different ink colourants, the ink colourants intermingle to form a dot of a predetermined colour.

A swath is defined as a region on a print medium on which is recorded during a pass of a print head relative to the medium. A print head pass is also referred to as a fast scan. During a pass of the print head, the print head scans or addresses predetermined pixel locations on the print medium. At those pixel locations ink can be recorded. Those pixel locations define the swath.

The scanned pixel locations are arranged in a matrix. The matrix of pixel locations scanned in a pass refers to a matrix comprising only those pixel locations that are scanned in said pass. In multi-pass printing, each pixel location can be addressed (scanned) a multiple number of times, in an equal number of passes.

In interlace printing, the recording of contiguous pixel locations is interlaced in several passes. In each pass, the print head records at less than final (image) resolution. Pixel locations recorded in different passes make up the print at final resolution. Hence, the matrix of pixel locations scanned in a pass does not have final (image) resolution.

After one or more passes, a feed is carried out for recording a different swath. A feed is also referred to as a slow scan. Consecutive swaths can overlap (as is the case for e.g. interlaced printing). Overlapping swaths can have some pixels (pixel rows) in common. The feed direction is the direction in which the medium is fed relative to the print head between passes of the print head.

### Aims of the Invention

The present invention aims to provide a method of colour dot matrix printing which reduces the amount of ink drop coalescence.

It is an aim of the invention to provide a colour dot matrix print method that avoids large ink deposition rates per pixel location and per pass. It is an aim of the invention to spread the ink recorded in a pass over a large area so as to improve ink drying times.

It is an aim of the invention to reduce the occurrence of mottled images.

It is an aim of the invention to achieve the above aims without a loss of speed compared to multi-pass print methods known in the art.

The present invention also aims to provide a colour dot matrix printing apparatus which is arranged for avoiding large ink deposition rates per print pass.

### Summary of the Invention

The aims of the invention are achieved by providing a colour dot matrix print method and apparatus as set out in the appended claims.

According to a first aspect of the invention, there is provided a method of colour dot matrix printing. The method comprises superposing droplets of a multitude of ink colourants on a medium in multiple passes of a print head relative to the medium in order to form a pixel of a predetermined colour. In each pass of the print head pixel locations on the medium are scanned by the print head. Said pixel locations are arranged in a matrix. In the method of the invention, each pixel location (i,j) scanned in a pass is arranged to receive in said pass one or more ink colourants. Said one or more ink colourants are different from the ink colourants arranged to be received in said pass by pixel locations contiguous to said pixel location (i,j) in the same row i and by pixel locations contiguous to said pixel location (i,j) in the same column j of the matrix of pixel locations scanned in said pass.

Preferably, in each pass the scanned pixel locations are arranged to receive one or more ink colourants different from the ink colourants arranged to be received by contiguous pixel locations in the same row and by contiguous pixel locations in the same column of the matrix of pixel locations scanned in the same pass.

Preferably, said contiguous pixel locations in the same row and/or in the same column of the matrix are contiguous on the medium to said scanned pixel location (i.e. the matrix has final (image) resolution in its rows and/or columns). More preferably, said one or more ink colourants are different from the ink colourants arranged to be received by diagonally contiguous pixel locations.

Preferably, each pixel location receives at most one ink colourant in each pass.

Preferably, for each pixel, each one of the ink colourants of the pixel is recorded in a different pass.

Preferably, in each pass each row or column of the matrix is arranged to receive a partial set of said multitude of ink colourants.

According to a second aspect of the invention, there is provided an apparatus for colour dot matrix printing, comprising means for carrying out the method according to the invention.

Preferably, the apparatus according to the invention comprises a print head arranged for printing a multitude of ink colourants, the print head comprising nozzles, wherein the nozzles for a portion of said multitude of ink colourants are positioned at half the pitch distance of the nozzles for the remainder portion of ink colourants.

### Brief Description of the Drawings

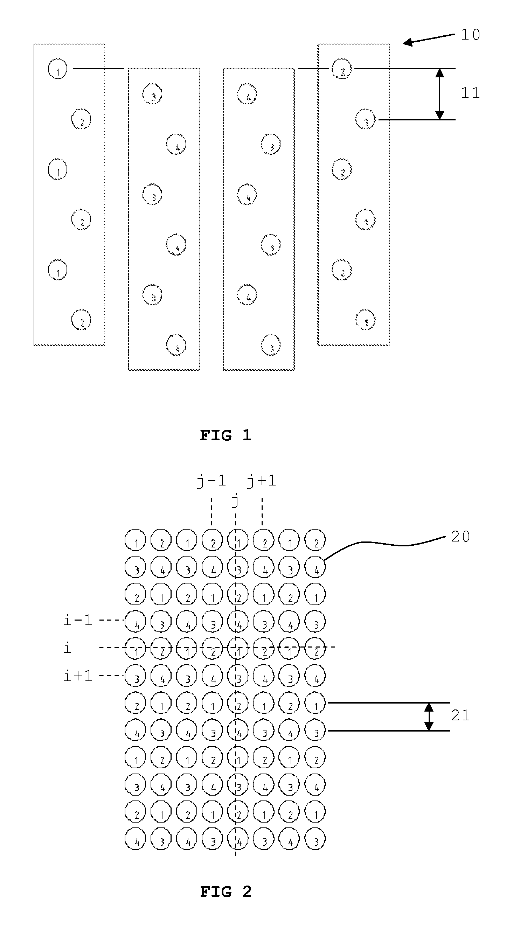

Figure 1 represents a preferred embodiment of a print head arranged for carrying out an embodiment of the print method of the invention. The print head is arranged for recording four ink colourants, wherein nozzles for two ink colourants are positioned at half the pitch distance of the nozzles for the two other ink colourants.

Figures 2-5 represent an embodiment of the print method of the invention. Pixel locations are represented by circles. Each numeral in a circle represents a droplet of a determined ink colourant recorded at the pixel location. The order of recording the ink colourants is from left to right.

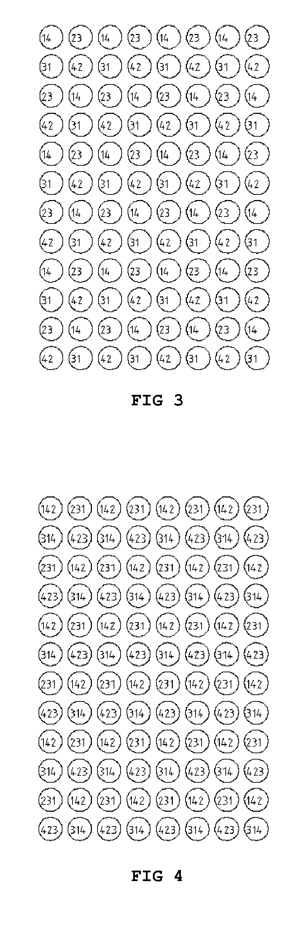

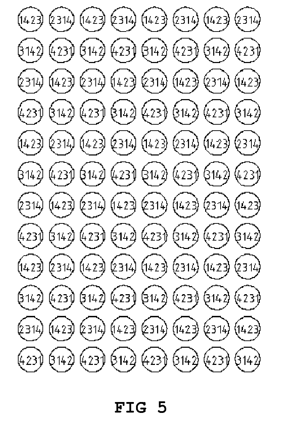

Figure 2 represents pixel locations that are arranged to be recorded (scanned) in a first print pass and the allocation of the ink colourants to the pixel locations. Figure 3 represents the pixel locations of figure 2, when they are scanned a second time by the print head (second print pass). Figures 4 and 5 represent the pixel locations of figure 2, when scanned a third and fourth time respectively by the print head.

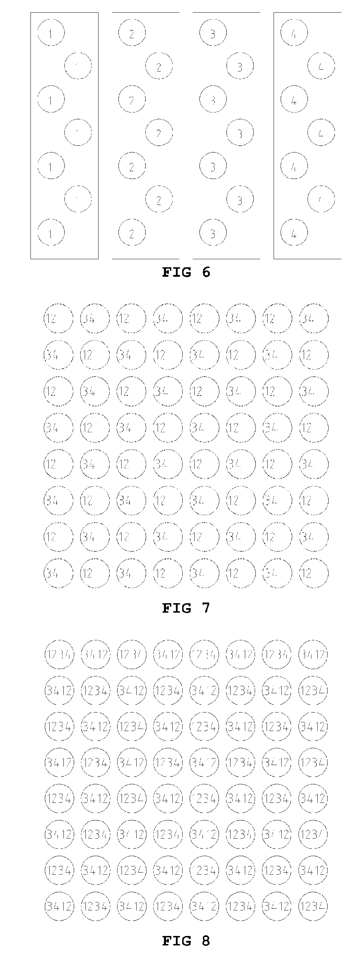

Figure 6 represents a preferred embodiment of a print head arranged for carrying out an embodiment of the print method of the invention. The print head is arranged for recording four ink colourants.

Figures 7 and 8 represent an embodiment of the print method of the invention applied to a two-pass print method and making use of four ink colourants. Pixel locations are represented by circles. Each numeral in a circle represents a droplet of a determined ink colourant recorded at the pixel location.

Figure 7 represents pixel locations that are arranged to be recorded in a first print pass and the allocation of the ink colourants to the pixel locations. Figure 8 represents the pixel locations of figure 7, when they are scanned a second time by the print head (second print pass).

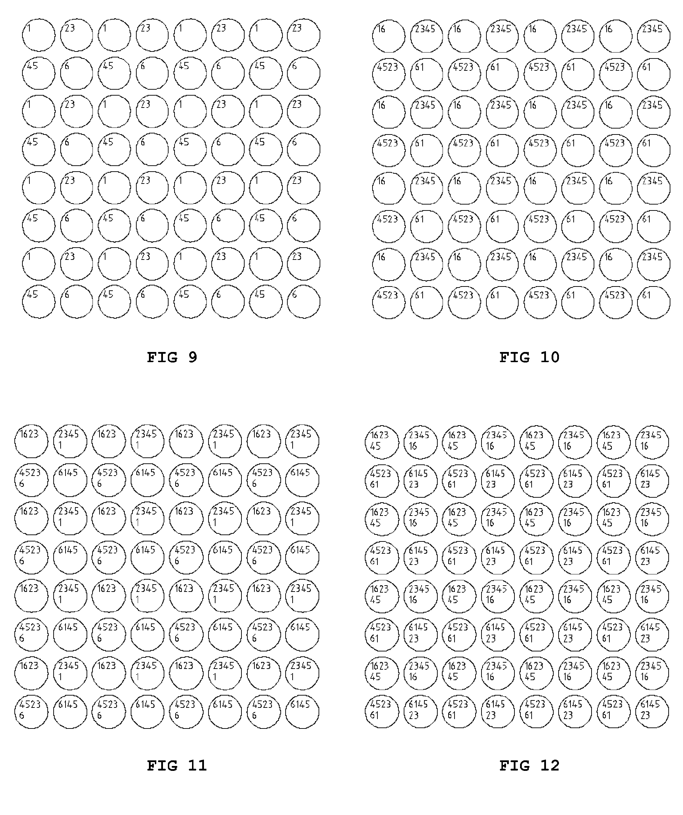

Figures 9-12 represent an embodiment of the print method of the invention applied to a four-pass print method and making use of six ink colourants. In order to apply the method of the invention, the ink colourants are recorded in four groups: 1, 2+3, 4+5, 6. Other subgroup divisions of the ink colourants are possible as well. Pixel locations are represented by circles. Each numeral in a circle represents a droplet of a determined ink colourant (1-6) recorded at the pixel location.

Figure 9 represents pixel locations that are arranged to be recorded in a first print pass and the allocation of the ink colourants to the pixel locations. Figure 10 represents the pixel locations of figure 9, when they are scanned a second time by the print head (second print pass). Figures 11 and 12 represent the pixel locations of figure 9, when scanned a third and fourth time respectively by the print head. In the present embodiment, the print head scans at full image resolution.

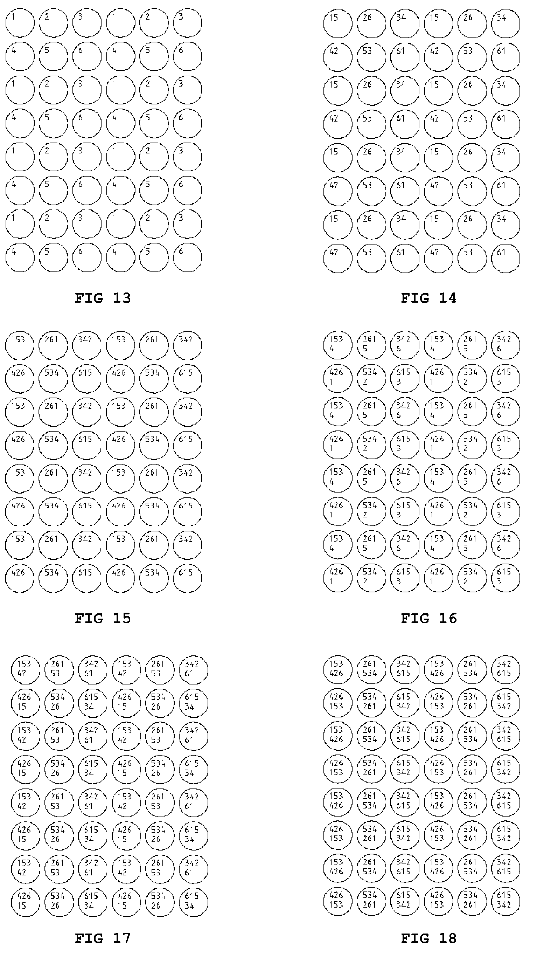

Figures 13-18 represent an embodiment of the print method of the invention applied to a six-pass print method and making use of six ink colourants. In each pass, only one ink colourant per pixel location is recorded. Pixel locations are represented by circles. Each numeral in a circle represents a droplet of a determined ink colourant (1-6) recorded at the pixel location.

Figure 13 represents pixel locations that are arranged to be recorded (scanned) in a first print pass and the allocation of the ink colourants to the pixel locations. Figure 14 represents the pixel locations of figure 13, when they are scanned a second time by the print head (second print pass). Figures 15 to 18 represent the pixel locations of figure 13, when scanned respectively a third, fourth, fifth and sixth time by the print head. In the present embodiment, the print head scans at full image resolution.

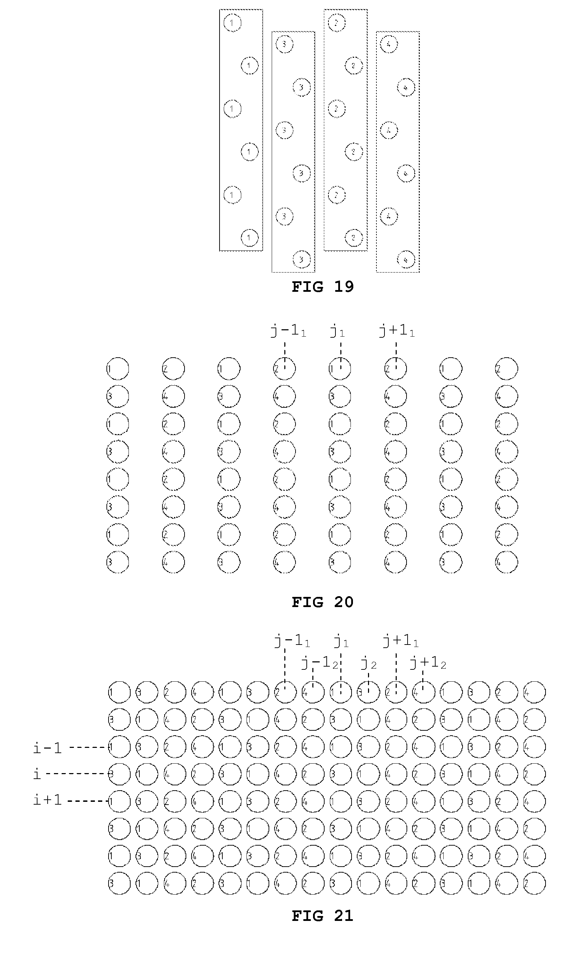

Figure 19 represents a preferred embodiment of a print head arranged for carrying out an embodiment of the print method of the invention. The print head is arranged for recording four ink colourants, wherein nozzles for two ink colourants are positioned at half the pitch distance of the nozzles for the two other ink colourants.

Figures 20-27 represent an embodiment of the print method of the invention applied to an eight-pass print method and making use of four ink colourants. In each pass, only one ink colourant per pixel location is recorded. Pixel locations are represented by circles. Each numeral in a circle represents a droplet of a determined ink colourant (1-4) recorded at the pixel location. The present embodiment illustrates the print method of the invention applied to an interlaced print method. Pixel columns are interlaced.

Figure 20 represents pixel locations that are arranged to be recorded (scanned) in a first print pass and the allocation of the ink colourants to the pixel locations. Figure 21 represents the pixel locations of figure 20, added with the pixel locations that are scanned in a second, interlaced pass to obtain full image resolution.

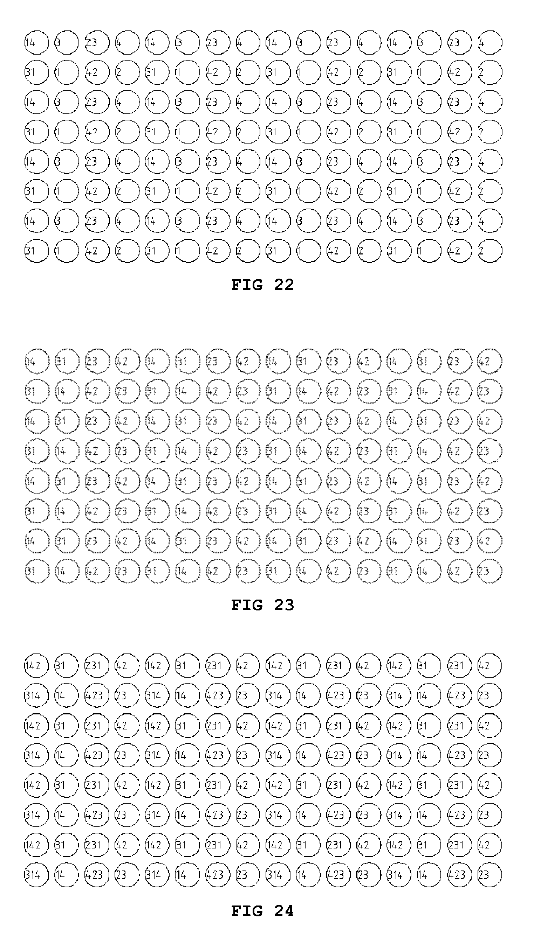

In figure 22, the pixel locations of figure 20 are scanned a second time (second pass for those pixels; third pass of the eight-pass print method). The rightmost numeral in these pixel locations indicates the allocation of ink colourants to the pixel locations scanned in said pass. Those ink colourants are arranged to be received by said pixel locations.

In figure 23, the pixel locations that are scanned in figure 21 are scanned a second time (second pass for those pixels; fourth pass of the eight-pass print method). The rightmost numeral in these pixel locations indicates the allocation of ink colourants to the pixel locations scanned in said pass. Those ink colourants are arranged to be received by said pixel locations.

Figures 24 to 27 represent respectively the fifth, sixth, seventh and eighth pass of the eight-pass print method. Pixels that are scanned in said passes are arranged to receive in said pass an ink colourant referred to by the rightmost numeral.

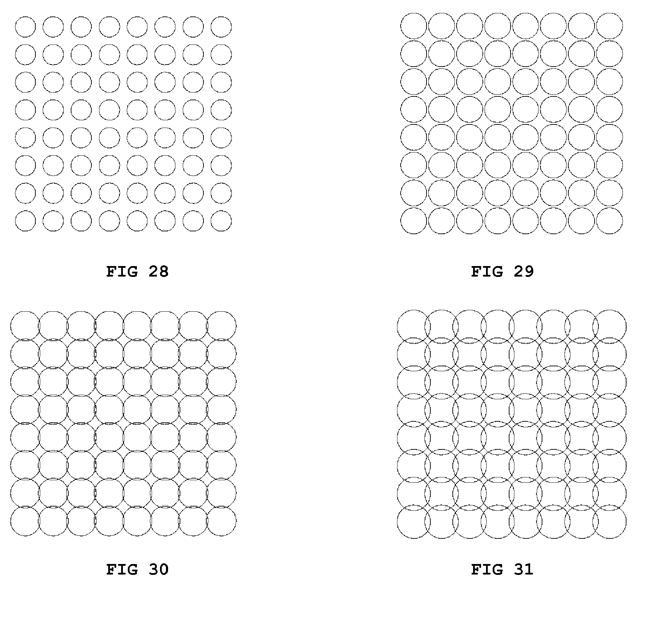

Figures 28 to 31 represent the concept behind the print method of the invention. Dots recorded at the pixel locations on the medium grow from pass to pass until they finally cover, as represented in figure 31, the entire pixel area. In the meantime, the dots at each pixel locations have had sufficient time to dry, which reduces ink coalescence.

Figure 28 represents the recorded ink dot size at pixel locations which receive a droplet of an ink colourant in a first pass. Figure 29 represents the recorded ink dot size at the pixel locations of figure 28 when in a second pass the pixel locations receive an ink colourant which is superposed on the dot of the first pass. Figures 30 and 31 represent the same for a third and a fourth pass respectively in a four-pass print method.

### Detailed Description of the Invention

The invention provides for a method of colour dot matrix (ink jet) printing. The print method of the invention makes use of a set of ink colourants. Droplets of a predetermined subset of ink colourants are superposed which eventually mix to form a dot on the print medium of a predetermined colour.

An ink colourant (or colourant ink) is an ink which can be used with other ink colourants to obtain a specified colour palette. Ink colourants can be inks having for example the primary colours cyan, yellow and magenta, added with black. Other sets of colourants, e.g. additionally comprising a lighter tone of one or more of the primary colours (e.g. light cyan and light magenta) are equally possible.

The print method of the invention is a multi-pass print method. The recording of droplets of ink colourants for a same pixel location is spread over multiple passes. Each pixel location on the print medium hence can be addressed (scanned) by the print head a multiple number of times (passes).

In the print method of the invention, each one of the pixel locations that are scanned in a pass (i.e. a fast scan) is arranged to receive in said pass one or more ink colourants, which ink colourants are different from the ones that are arranged to be received by pixel locations which, in the matrix of scanned pixel locations of the pass, lie at adjacent (i.e. contiguous) positions in the same row and different from the ones that lie at adjacent positions in the same column. The one or more ink colourants are a partial set (not all) of the ink colourants carried by the print head.

The term "arranged to be received" refers to whether the one or more ink colourants are actually received by (i.e. recorded at) the pixel location in said pass or not. This depends on the print data. If the print data comprises said one or more ink colourants for the pixel, then they will be recorded in the pass at said pixel location. If the print data comprises for that pixel only a partial set of the one of more ink colourants, only the partial set will be recorded in said pass at that pixel location. If the print data comprises for that pixel none of said one of more ink colourants, no ink will be recorded in said pass at that pixel location.

Preferably, the one or more ink colourants that are arranged to be received by a pixel location differ additionally from the ones arranged to be received by pixel locations that lie at diagonally adjacent positions in the matrix (in the rows or columns directly preceding and following the row or column of the pixel location considered).

The method can be applied to some predefined passes only. The method is however preferably applied to each print head pass. In the latter case hence, in each pass the pixel locations that are scanned are arranged to receive in said pass (if the print data allows) one or more ink colourants which are different from the ink colourants arranged to be received by pixel locations which in the matrix of scanned pixel locations of the pass lie at adjacent positions in the same row and in the same column.

In a preferred embodiment of the method of the invention, some or all pixel locations that lie at adjacent positions in the matrix are contiguous on the print medium. In other words, the print method of the invention can be applied to methods in which print passes (or swaths) record at full image resolution, either only in fast scan or slow scan direction, or both. As a result, in a pass of the print head relative to the print medium (i.e. a fast scan), contiguous pixel locations on the print medium are arranged to receive different ink colourants.

Hence, for illustrating the method of the invention, consider the matrix representing pixel locations that are scanned in a pass N. Consider pixel location in row i and column j of the matrix, referred to by (i,j). If pixel location (i,j) in pass N receives a droplet of a first ink colourant, the pixels adjacent to pixel (i,j) in the same row or column, hence pixel locations (i-1,j), (i+1,j), (i,j-1) and (i,j+1) will not receive in pass N droplets of the first ink colourant. Said adjacent pixels can receive droplets of a second, a third or a fourth ink colourant, in case a set of four ink colourants are used.

In order to print pixels of predetermined colours with the print method of the invention, in a following pass N', the pixel locations adjacent to pixel (i,j) can receive one or more droplets of the first ink colourant, provided that pixels that receive in pass N' the first ink colourant are not adjacent in the matrix. The same applies to the other ink colourants.

The term adjacent pixel locations refers to sideways adjacent pixels. The term can also comprise diagonally adjacent pixel locations. In the illustrating example above, the pixels which are diagonally adjacent to (i,j) are pixels at positions: (i-1,j-1), (i-1,j+1), (i+1,j+1) and (i-1,j-1) in the matrix.

The term contiguous pixel locations refers to sideways contiguous pixels. The term can also comprise diagonally contiguous pixel locations.

In a preferred embodiment, each pixel location is arranged to receive one ink colourant per pass. As a result, the pixel location receives at most one ink colourant (none if the print data does not comprise the ink colourant for that pixel). By way of example, in a pass N of the print head, each pixel location addressed during pass N receives at most (a droplet of) one ink colourant. Hence, if the set consists of four ink colourants, four passes are needed for recording a pixel comprising all four ink colourants.

Preferably, at a pixel location, each one of the ink colourants is arranged to be recorded in a different pass of the print head.

A first preferred embodiment of the method of the invention is illustrated with the aid of figures 2-5. Referring to figures 2-5, the circles 20 represent pixels of an image. The one or more numerals within each circle represent the ink colourant(s) that has/have been recorded in the particular pixel location. The order of recording (or superposition) is from left to right: the ink colourant referred to by the leftmost numeral in a circle has been recorded first. A total of four ink colourants are used in the present embodiment. It is also assumed that eventually all pixels represented in figures 2-5 are composed of the same ink colourants, namely all four ink colourants.

Figure 2 represents the droplets of ink colourants that are recorded in a first print pass (the pixel locations represented in figure 2 are scanned for the first time). In the present embodiment, the pixels are scanned at full resolution, i.e. pixels that lie at adjacent positions in the matrix of the print pass are contiguous on the print medium. In each pixel location (each circle) one ink colourant is recorded. In contiguous pixel locations different ink colourants are recorded. For example, pixel location at row i and column j: (i,j) receives ink colourant 1. The pixel locations contiguous to pixel (i,j), hence pixels: (i-1,j), (i+1,j), (i,j-1) and (i,j+1), all receive an ink colourant different from colourant 1. Also pixels which are diagonally contiguous to pixel (i,j), hence pixels: (i-1,j-1), (i-1,j+1), (i+1,j+1) and (i-1,j-1), receive an ink colourant different than colourant 1.

Figure 3 represents the droplets of ink colourants that are recorded in the first pass, added with those recorded when the same pixel locations of figure 2 are scanned a second time (second print pass). Hence, for each pixel location in figure 3, the rightmost numeral refers to the ink colourant recorded in a second pass. Similarly to the first pass, each pixel location receives one ink colourant in the second pass and contiguous pixel locations each receive a different ink colourant. The droplet of ink colourant received by a pixel in the second pass is superposed on the droplet of ink colourant recorded in the first pass.

As is clear from figure 3, the ink colourant recorded at a particular pixel location in the second pass is different from the ink colourant recorded at that same pixel location in the first pass.

Figure 4 represents the situation of figure 3, added with the droplets of ink colourants that are recorded in a third pass. The ink colourant recorded at a particular pixel location in the third pass is different from the ink colourants recorded at that same pixel location in the first and the second pass. Contiguous pixel locations receive different ink colourants in the third pass.

Figure 5 represents the situation after the considered pixel locations have been scanned by the print head for a fourth time (fourth pass). All pixel locations have received the four ink colourants. For all pixel locations, each ink colourant was recorded in a different print pass. In all passes, contiguous pixels each received a different ink colourant.

When for a pixel (i,j) the print data lacks an ink colourant, that ink colourant is not recorded for pixel (i,j). The numerals in figures 2-5 hence refer to the ink colourants that should be (are arranged to be) recorded in a predefined pass if the print data provides for that colourant for a given pixel.

It should be noted that the terms first, second, third and fourth pass need not be the same physical print head pass (or scan) for all pixel locations represented in figures 2-5. When a medium feed is carried out in between each two print head passes, some pixel locations can be scanned for a n^{th} time during a pass N, while others during a pass N+1.

It should be noted that the method described in the present embodiment is applicable to multi-dot size print heads. The droplets of ink recorded in each single pass can have a different size.

Referring again to the embodiment illustrated in figures 2-5, in each pixel row i only two of a total of four ink colourants are recorded in each pass. Two consecutive pixel rows (e.g. rows i and i+1) each receive two different ink colourants. Hence, in order to address all pixel locations represented in figure 2 in a single pass, it is sufficient to have the nozzles for two ink colourants shifted with reference to the two other ink colourants over half the pitch distance in the feed direction. Such a print head is represented in figure 1. Hence, for carrying out the present embodiment, the print head resolution need not be increased compared to interlaced print methods known in the art, but the nozzle configuration can be adapted.

In another preferred embodiment, each pixel column receives in each pass only two of the four ink colourants. Two consecutive pixel columns receive two different ink colourants.

Figures 7 and 8 illustrate a preferred embodiment applied to a two-pass print method with four ink colourants. The same conventions as in figures 2-5 are used. Pixel locations are scanned at image resolution. Hence, in the matrix of pixels that are scanned in a pass, adjacent pixel elements are also contiguous on the medium.

The first pass (first scan) is illustrated in figure 7. Each scanned pixel location receives two ink colourants. Adjacent (contiguous) pixel locations on a same row or column receive different ink colourants. E.g. referring to figure 7, if at one pixel location ink colourants 1 and 2 are recorded, at adjacent pixel locations in the same row or column ink colourants 3 and 4 are recorded.

The remainder two ink colourants are recorded in a second pass, as illustrated in figure 8. For implementing the present embodiment illustrated in figures 7 and 8, a print head as represented in figure 6 can be used. The print head of figure 6 has the same nozzle resolution as the resulting image resolution on the medium of figures 7 and 8.

A preferred embodiment making use of six ink colourants and applied to a four-pass print method is illustrated in figures 9-12. The same conventions as in figures 2-5 are used. Pixel locations are scanned at image resolution. The six ink colourants are subdivided into four groups (1, 2+3, 4+5 and 6) for being used in a four-pass print method. The four groups can be recorded as for example in the embodiment illustrated by figures 2-5.

In a first pass (first scan of the pixel locations), the ink colourants are allocated to the pixel locations as represented in figure 9. Some pixel locations can receive only one ink colourant, e.g. colourant 1 or colourant 6. Other pixel locations can receive two ink colourants in a single pass, e.g. colourants 2 and 3 or colourants 4 and 5. Figures 10, 11 and 12 illustrate the ink colourants recorded after respectively a second, third and fourth pass (or scan of the pixel locations).

Figures 13-18 illustrate a preferred embodiment for recording six ink colourants applied to a six-pass print method. The same conventions as in figures 2-5 are used. Pixel locations are scanned at image resolution. All pixel locations receive one ink colourant per pass. Sideways contiguous and diagonally contiguous pixel locations receive in a same pass different ink colourants.

Figure 13 represents the allocation of the ink colourants in a first pass (or a first scan). Figures 14 to 18 represent the ink colourants that are arranged to be received by the same pixel locations after respectively a second, third, fourth, fifth and sixth pass (or scan).

In all embodiments described above, in each pass the pixels are recorded at image resolution. This is not the case for interlaced printing, wherein subsequent pixel rows and/or pixel columns are recorded in different, interlaced passes because the image resolution is the double (or more) of the resolution of the print head.

An embodiment of the method of the invention applied to interlaced printing is illustrated in figures 20-27. The same conventions as in figures 2-5 are used. The print method of figures 20-27 interlaces pixel columns. Hence, in fast scan direction (horizontal in the figures, corresponding with rows of pixels) each pass prints at half image resolution. In slow scan direction (vertical in the figures, corresponding with columns of pixels) the different pixel columns are printed at full image resolution.

Figure 20 represents the pixel locations that in a first pass (first scan) are arranged to receive a droplet of an ink colourant. A total of four ink colourants are used. Each pixel location is considered to eventually receive all four ink colourants. Pixels which are adjacent to a given pixel in the same row or column are arranged to receive a different ink colourant than the given pixel. Each pixel row receives two ink colourants which alternate between consecutive pixel locations in the row.

Figure 21 represents the pixel locations scanned in the first pass (the pixel columns of figure 20, which are indicated with subscript 1: columns j-1₁, j₁, j+1₁, etc.) and those scanned in a second pass, which are indicated with subscript 2: columns j-1₂, j₂, j+1₂, etc.). The pixel columns scanned in the second pass (columns j-1₂, j₂, j+1₂, etc.) are interlaced with those scanned in the first pass (columns j-1₁, j₁, j+1₁, etc.). Adjacent pixels in the matrix of pixels scanned in the second pass each receive a different ink colourant. In the present embodiment as illustrated in figure 21, pixels (i,j-1₂), (i,j+1₂), (i-1,j₂) and (i+1,j₂) are adjacent to pixel (i,j₂). Pixels in columns with subscript 1 do not count, as they are scanned in different (interlaced) passes and hence do not appear in the matrix of scanned pixel locations of the present pass.

Figure 22 represents the pixel locations after a third pass. The pixel columns scanned in the first pass (bearing subscript 1) are scanned in the third pass. The scanned pixel locations are arranged to receive a second ink colourant, which is different for adjacent pixel locations in the matrix. In the fourth pass, as illustrated in figure 23 a second ink colourant is recorded in those pixel columns which are scanned in the second pass (the columns bearing subscript 2).

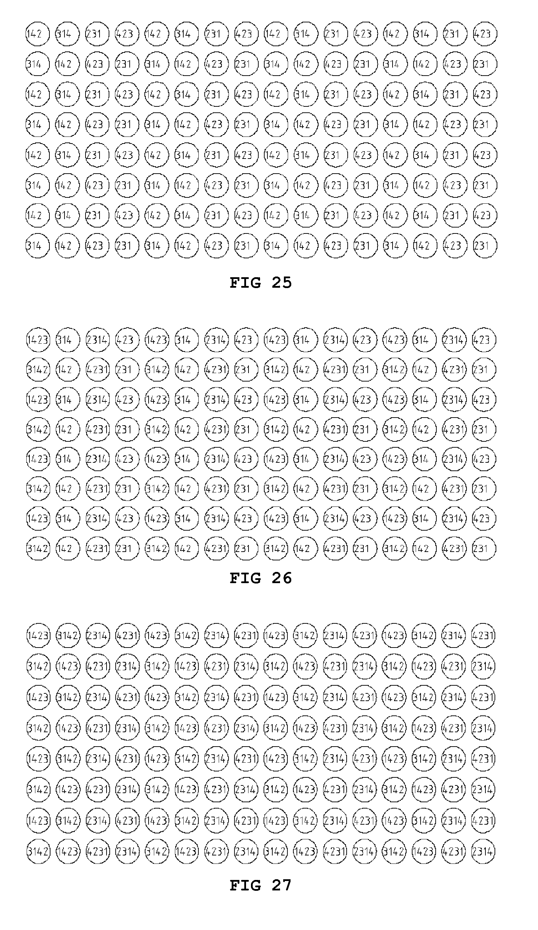

Figures 24 and 25 illustrate the ink colourants recorded in a fifth and sixth pass respectively. Figures 26 and 27 illustrate the ink colourants recorded in a seventh and eighth pass respectively.

A total of eight passes are needed in the present embodiment for recording all four ink colourants at all pixel location along a pixel row of the image. A print head as represented in figure 1 or in figure 19 may be used for implementing the present embodiment.

The print method of the invention has the advantage of limiting the dot size recorded in each pass at a pixel location. This reduces the occurrence of ink coalescence across the pixel boundaries and prevents mottled images. The pixel dots grow from pass to pass. This is illustrated in the sequence of figures 28-31 for a four-pass print method. The circles represent the total (superposed) recorded dot size after each pass (fig. 28: pass 1, fig. 29: pass 2, fig. 30: pass 3 and fig. 31: pass 4). In case these dots of superposed droplets become large enough to combine (coalesce) with neighbouring dots, they have had sufficient time to dry, which reduces or prevents the occurrence of mottled images. As with the print method of the invention the ink recorded in a pass is spread over a large number of pixels, the area on the medium covered by the recorded droplets is large too, which is beneficial for improving ink drop drying times.

A second advantage of the print method of the invention is that the order of superposition of the different ink colourants is varied between contiguous pixels. As a result, the differences in hue due to unequal drying times in bidirectional printers are less visible.

An additional advantage of the print method of the invention is that there is no loss of speed compared to print methods of the prior art. A four-pass print method can remain four-pass with only a change in the way the pixels are recorded as presently described.

The invention also provides a printing apparatus which comprises the means for carrying out the colour print method of the invention.

In a preferred embodiment, the printing apparatus comprises a print head 10, as illustrated in figure 1, which allows the pixels to be recorded at full image resolution. The resolution of the print head is half the image (column) resolution, i.e. the nozzles of the print head, for each one ink colourant, are arranged at a pitch distance 11 which is twice the interspacing 21 between two consecutive pixel rows in the image printed on the medium.

The pitch distance refers to the smallest distance 11 between two nozzles of the print head which record a same ink colourant. The pitch distance is measured in the direction of feed of the medium relative to the print head, i.e. the direction of pixel columns in the image.

Print head 10 is arranged for recording four different ink colourants 1-4. Each circle represents a nozzle. Each nozzle is arranged for recording droplets of the ink colourant indicated within the circle.

Hence, the nozzles of print head 10 are grouped in two groups: nozzles for ink colourants 1,2 and nozzles for ink colourants 3,4. The nozzles of each group are arranged at a pitch distance 11 in feed direction. The nozzles for ink colourants 3,4 are positioned at locations half between the nozzles for ink colourants 1,2 (half the pitch distance). Such a print head 10 allows for implementing the print method of the invention and to record pixels at full image resolution in multi-pass print mode. An alternative embodiment of the print head 10 is represented in figure 19.

## Claims

1. A colour dot matrix print method comprising superposing droplets of a multitude of ink colourants on a medium in multiple passes of a print head relative to the medium in order to form a pixel of a predetermined colour, wherein in each pass pixel locations on the medium are scanned by the print head, said pixel locations arranged in a matrix and wherein each pixel location (i,j) scanned in a pass is arranged to receive in said pass one or more ink colourants, said one or more ink colourants being different from the ink colourants arranged to be received in said pass by pixel locations contiguous to said pixel location (i,j) in the same row i and by pixel locations contiguous to said pixel location (i,j) in the same column j of the matrix of pixel locations scanned in said pass.

2. The method according to claim 1, wherein in each pass the scanned pixel locations are arranged to receive one or more ink colourants different from the ink colourants arranged to be received by contiguous pixel locations in the same row and by contiguous pixel locations in the same column of the matrix of pixel locations scanned in the same pass.

3. The method according to claim 1 or 2, wherein said contiguous pixel locations in the same row and/or in the same column of the matrix are contiguous on the medium to said scanned pixel location.

4. The method according to claim 3, wherein said one or more ink colourants are different from the ink colourants arranged to be received by diagonally contiguous pixel locations.

5. The method according to any one of the preceding claims, wherein each pixel location receives at most one ink colourant in each pass.

6. The method according to any one of the preceding claims, wherein for each pixel, each one of the ink colourants of the pixel is recorded in a different pass.

7. The method according to any one of the preceding claims, wherein in each pass each row or column of the matrix is arranged to receive a partial set of said multitude of ink colourants.

8. An apparatus for colour dot matrix printing, comprising means for carrying out the method according to any one of the claims 1 to 7.

9. The apparatus according to claim 8, comprising a print head (10) arranged for printing a multitude of ink colourants, the print head comprising nozzles, wherein the nozzles for a portion of said multitude of ink colourants are positioned at half the pitch distance (11) of the nozzles for the remainder portion of ink colourants.
